# EUROPÄISCHE PATENTSCHRIFT

(11) **EP 3 087 296 B1**
(45) Veröffentlichungstag und Bekanntmachung des Hinweises auf die Patenterteilung: **25.10.2017**
(21) Anmeldenummer: 14825279.4
(22) Anmeldetag: 15.12.2014
(51) Int. Cl.: F16J 7/00, F16J 15/3268, F16J 15/26, F16J 15/24

(54) **DICHTRING**
SEALING RING
BAGUE D'ÉTANCHÉITÉ

(30) Priorität: 23.12.2013 EP 13199268
(43) Veröffentlichungstag der Anmeldung: 02.11.2016
(73) Patentinhaber: Burckhardt Compression AG, 8404 Winterthur (CH)
(72) Erfinder: FEISTEL, Norbert, CH-8548 Ellikon a.d. Thur (CH)
(74) Vertreter: Dr. Graf & Partner AG
(86) Internationale Anmeldenummer: PCT/EP2014/077780
(87) Internationale Veröffentlichungsnummer: WO 2015/097014

(56) Entgegenhaltungen:
- EP-A1- 2 479 460
- AT-A4- 505 550
- GB-A- 163 200
- JP-A- S56 101 462
- US-A- 1 782 258
- US-A- 1 813 016
- US-A- 1 819 559

## Beschreibung

Die Erfindung betrifft einen Dichtring gemäss dem Oberbegriff von Anspruch 1.

### Stand der Technik

Das Dokument EP 2060833 A1 offenbart eine Packungsring-Kombination zum Abdichten einer Kolbenstange, wobei die Packungsring-Kombination einen Dichtring und einen Anschlagring umfasst. Diese Packungsring-Kombination weist den Nachteil auf, dass die Dichtsegmente nach einem gewissen Verschleiss einem Verschleissstopp unterliegen, sodass sich zwischen dem Dichtsegment und der Kolbenstange ein Spalt ausbilden, was zur Folge hat, dass die Dichtwirkung erheblich reduziert wird. Diese bekannte Packungsring-Kombination weist somit den Nachteil auf, dass sich die Dichtwirkung nach einer gewissen Abnutzung erheblich reduziert. Das Dokument EP2479460A1 offenbart einen Ölabstreifring.

### Darstellung der Erfindung

Aufgabe der Erfindung ist es einen wirtschaftlich vorteilhafteren Dichtring zum Abdichten von Kolbenstangen auszubilden.

Diese Aufgabe wird gelöst mit einem Dichtring aufweisend die Merkmale von Anspruch 1. Die Ansprüche 2 bis 14 betreffen weitere, vorteilhaft ausgestaltete Dichtringe. Diese Aufgabe wird insbesondere gelöst mit einem Dichtring umfassend einen Haltering aufweisend einem kreisförmigen Innendurchmesser und eine Mittenachse, sowie umfassend eine Mehrzahl von Dichtsegmenten, welche in zur Mittenachse radialer Richtung verschiebbar im Haltering gelagert sind, wobei jedes Dichtsegment eine zur Mittenachse hin ausgerichtete und in Umfangsrichtung zur Mittenachse gekrümmt verlaufende Dichtfläche aufweist, und wobei jedes Dichtsegment zwei gegenseitig parallel verlaufende seitliche Dichtsegmentführungsflächen aufweist, wobei die Dichtfläche beidseitig an je einer der beiden Dichtsegmentführungsflächen endet, und wobei der Haltering eine Mehrzahl von in Umfangsrichtung gegenseitig beabstandet angeordnete Führungssegmente umfasst, wobei jeweils zwei in Umfangsrichtung nacheinander folgende Führungssegmente gegenseitig zugewandte und parallel verlaufende Führungsflächen aufweisen, die derart gegenseitig beabstandet angeordnet und ausgestaltet sind, dass das Dichtsegment über dessen Dichtsegmentführungsflächen an den zwei seitlichen Führungsflächen geführt und in radialer Richtung verschiebbar gelagert ist, wobei in Umfangsrichtung nacheinander folgend Führungssegmente und Dichtsegmente angeordnet sind. Der Haltering ist einstückig ausgestaltet und erstreckt sich entlang eines Umfangswinkels von 360°.

Der erfindungsgemässe Dichtungsring weist den Vorteil auf, dass sich dessen Dichtwirkung auch mit fortschreitendem Verschleiss nicht verändert. Im Gegensatz dazu verändert sich die Dichtwirkung bei dem aus dem Stand der Technik bekannten Dichtring ab einem gewissen Verschleiss grundsätzlich, indem der aus dem Stand der Technik bekannte Dichtring ab dem gewissen Verschleiss eine reibungsfreie Spaltdichtung ausbildet, was eine entsprechende Erhöhung der Leckage zur Folge hat. Beim erfindungsgemässen Dichtring ändert sich dessen Leckagequerschnitt und somit auch dessen Dichtwirkung auch bei fortschreitendem Verschleiss und während dem gesamten Verschleissweg nicht. Der erfindungsgemässe Dichtring gewährleistet somit eine langfristig gleichmässig wirkende, zuverlässige Dichtung, was einerseits eine zuverlässige Dichtwirkung gewährleistet und was andererseits die Wartungskosten reduziert.

In einer besonders vorteilhaften Ausgestaltung sind in Umfangsrichtung vier Dichtsegmente gegenseitig beabstandet angeordnet und in Richtung zur Mittenachse hin im Haltering verschiebbar gelagert. In einer weiteren möglichen Ausgestaltung umfasst der erfindungsgemässe Dichtring zumindest fünf Dichtsegmente, vorzugsweise sechs oder acht Dichtsegmente.

In einer vorteilhaften Ausgestaltung weisen alle Dichtsegmente in Umfangsrichtung dieselbe Breite auf.

In einer weiteren möglichen Ausführungsform weisen zumindest zwei in Umfangsrichtung nacheinander folgend angeordnete Dichtsegmente in axialer Richtung beziehungsweise in Richtung der Mittenachse einen gegenseitigen Versatz auf, in dem die Dichtsegmente in axialer Richtung gegenseitig verschoben angeordnet sind. Vorzugsweise ist dieser Versatz gleich gross oder grösser als die Höhe des Dichtsegmentes in axialer Richtung, wodurch es möglich ist, dass zwei in Umfangsrichtung nacheinander folgend angeordnete Dichtsegmente derart breit ausgestaltet sind, dass diese sich in Umfangsrichtung gegenseitig überlappen.

In einer weiteren vorteilhaften Ausgestaltung ist zumindest ein Dichtsegment und vorzugsweise alle Dichtsegmente mit einem Aktuator verbunden, beispielsweise mit eine piezoelektrischen Aktuator, um die Stellung der Dichtsegmente in zur Mittenachse radialer Richtung anzusteuern. In einer vorteilhaften Ausgestaltung ist zudem ein Sensor vorgesehen, der es ermöglichst die Lage der zur Kolbenstange hin ausgerichteten Stirnseite des Dichtsegmentes zu ermitteln, um beispielsweise die Spaltbreite zwischen der Oberfläche der Kolbenstange und der Stirnseite des Dichtsegmentes zu ermitteln. In einer vorteilhaften Ausführungsform ist eine Steuer-und Regelungsvorrichtung vorgesehen, die es erlaubt die Lage der Dichtsegmente mit Hilfe der vom Sensor gemessenen Werte und mit Hilfe der Aktuatoren derart anzusteuern, dass die Dichtsegmente eine vorherbestimmte Lage einnehmen, sodass die Stirnseite eines jeweiligen Dichtsegmentes beispielsweise einen vorgegebenen Abstand zur Oberfläche der Kolbenstange aufweist, sodass die Spaltbreite zwischen Kolbenstange und Dichtsegment einstellbar und regelbar ist. Eine derartige Ausführungsform weist beispielsweise den Vorteil auf, dass die Dichtsegmente einen äusserst geringen Verschleiss aufweisen, da die Stirnseite des Dichtsegmentes die Kolbenstange nicht oder nur geringfügig berührt, sodass keinen oder einen nur geringen Abrieb der Stirnseite des Dichtsegmentes zur Folge hat.

### Kurze Beschreibung der Zeichnungen

Die zur Erläuterung der Ausführungsbeispiele verwendeten Zeichnungen zeigen:
- Fig. 1: einen Längsschnitt durch eine Dichtungsanordnung;
- Fig. 2: ein erstes Ausführungsbeispiel eines Dichtrings;
- Fig. 3: eine Draufsicht auf ein zweites Ausführungsbeispiel eines Dichtrings;
- Fig. 4: einen Schnitt durch Figur 3 entlang der Linie A-A;
- Fig. 5: eine Draufsicht auf ein Dichtsegment;
- Fig. 6: eine Seitenansicht des Dichtsegments gemäss Figur 5;
- Fig. 7: einen Schnitt durch das Dichtsegment gemäss Figur 5 entlang der Linie B-B;
- Fig. 8: eine Draufsicht auf ein weiteres Dichtsegment;
- Fig. 9: eine Draufsicht auf ein drittes Ausführungsbeispiel eines Dichtrings;
- Fig. 10: einen Schnitt durch Figur 9 entlang der Linie C-C;
- Fig. 11: ein Schnitt durch Figur 8 entlang der Linie D-D;
- Fig. 12: eine Draufsicht auf ein viertes Ausführungsbeispiel eines Dichtrings;
- Fig. 13: einen Schnitt durch Figur 12 entlang der Linie E-E;
- Fig. 14: eine Draufsicht auf einen Deckring;
- Fig. 15: ein Schnitt durch den Deckring gemäss Figur 14 entlang der Linie F-F;
- Fig. 16: ein fünftes Ausführungsbeispiel eines Dichtrings;
- Fig. 17: einen Schnitt durch ein sechstes Ausführungsbeispiel eines Dichtrings;
- Fig. 18: eine Draufsicht auf einen Ausschnitt eines Führungsrings;
- Fig. 19: einen Längsschnitt durch eine Dichtungsanordnung mit aktiv betätigbaren Dichtsegmenten;
- Fig. 20: und 21zwei mögliche Ausgestaltungen der gegenseitigen Führungsflächen von Führungssegment und Dichtsegment.

Grundsätzlich sind in den Zeichnungen gleiche Teile mit gleichen Bezugszeichen versehen.

### Wege zur Ausführung der Erfindung

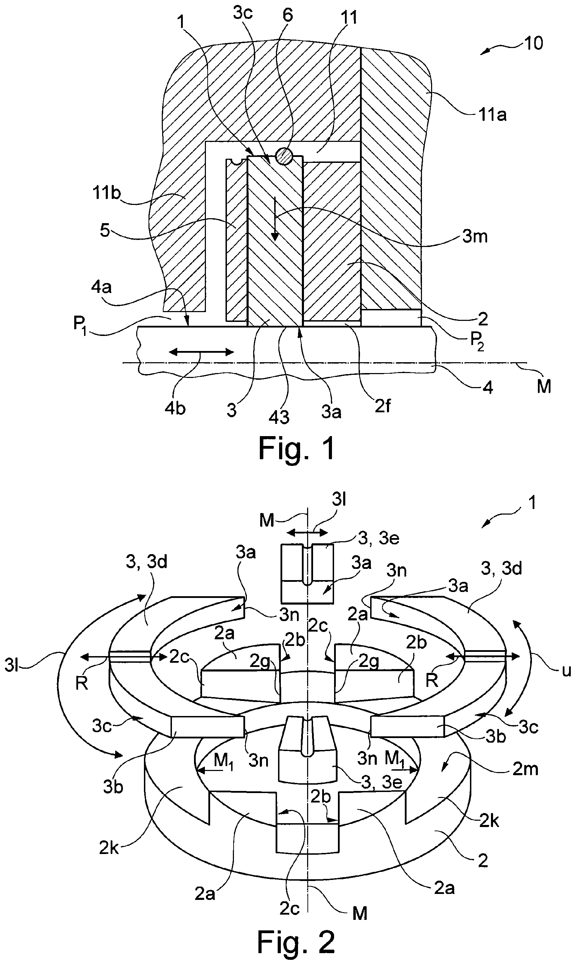

Fig. 1 zeigt einen Längsschnitt durch eine Dichtungsanordnung 10 zum Abdichten einer in axialer Richtung 4b oszillierenden Kolbenstange 4 eines Kolbenkompressors. Die Dichtungsanordnung 10 umfasst vorzugsweise eine Mehrzahl von in axialer Richtung 4b nacheinander folgend angeordneten Packungskammern 11 mit je einer ersten und zweiten Seitenwand 11a, 11b, wobei in jeder Packungskammer 11 ein Dichtring 1 angeordnet ist. Der Gasdruck in der Packungskammer 11 baut sich über den Dichtring 1 vom höheren Druck P1 auf den tieferen Druck P2 ab. Dieser Druckabbau erfolgt insbesondere über dem zwischen der Stirnseite 3a des Dichtsegments 3 und der Oberfläche 4a der Kolbenstange 4 gebildeten Dichtspalt 43. Der erfindungsgemässe Dichtring 1 umfasst, wie in Figur 2 in einem Ausführungsbeispiel dargestellt, einen sich über 360° erstreckenden Haltering 2 aufweisend einen kreisförmigen Innendurchmesser M1 und eine Mittenachse M, und umfasst eine Mehrzahl in radialer Richtung zur Mittenachse M hin im Haltering 2 verschiebbar gelagerte Dichtsegmente 3. Der Haltering 2 ist einstückig ausgestaltet und erstreckt sich ohne eine Trennfuge entlang eines Umfangswinkels von 360°. Wie aus Figur 1 ersichtlich ist der Innendurchmesser M1 grösser ausgestaltet als der Aussendurchmesser der Kolbenstange 4, sodass sich zwischen dem Haltering 2 und der Kolbenstange 4 ein Spalt 2f ergibt. Durch den höheren Druck P1, welcher an der Dichtsegmentaussenseite 3c anliegt, wird das in Richtung zur Mittenachse M hin verschiebbar gelagerte Dichtsegment 3 über dessen Stirnseite 3a mit einer Anpresskraft 3m an die Oberfläche 4a der Kolbenstange 4 gedrückt. Die Bewegung der Kolbenstange 4 bewirkt einen Verschleiss des Dichtsegmentes 3 an der Stirnseite 3a. Die einwirkende Anpresskraft 3m sowie die Eigenschaft des Dichtsegments 3 zur Mittenachse M hin verschiebbar gelagert zu sein hat zur Folge, dass der Dichtspalt 43 zuverlässig abgedichtet bleibt, notfalls bis beinahe das gesamte Dichtsegment 3 verschlissen ist. Der erfindungsgemässe Dichtungsring 3 weist deshalb eine langfristig zuverlässige, konstante Dichtwirkung auf, notfalls bis das gesamte Dichtsegment 3 verschlissen ist. Das Dichtsegment 3 weist den Vorteil auf, dass an der Stirnseite 3a in dessen Umfangsrichtung U kein ungleicher oder nur ein minimal ungleicher Materialabtrag stattfindet, sodass sich der Leckagequerschnitt des Dichtspaltes 43 und somit die Dichtwirkung des Dichtspaltes 43 über den gesamten Verschleissweg des Dichtsegmentes 3 nicht oder nur vernachlässigbar gering ändert. Der Dichtring 1 weist zudem den Vorteil auf, dass sich das Dichtsegment 3 elastisch und/oder plastisch nicht oder nur minimal verformt, was wiederum zur Folge hat, dass sich der Leckagequerschnitt des Dichtspaltes 43 und somit die Dichtwirkung des Dichtspaltes 43 über den gesamten Verschleissweg des Dichtsegmentes 3 nicht oder nur vernachlässigbar gering verändert. Der erfindungsgemässe Dichtring 1 weist somit eine langfristig zuverlässige Dichtwirkung auf.

Insbesondere zur Montage des Dichtrings 1 kann es vorteilhaft sein, wenn eine Feder wie eine Schlauchfeder 6 vorgesehen ist, welche alle Dichtsegmente 3 in Umfangsrichtung U umschliesst.

Figur 1 zeigt zudem noch einen optionalen Deckring 5, der zur Verbesserung der Dichtwirkung des Dichtrings 1 dient. Auf den Deckring 5 kann jedoch auch verzichtet werden.

Nachfolgend werden unterschiedliche Ausführungsformen von Dichtringen 1 offenbart.

Der in Figur 2 dargestellte Dichtring 1 zum Abdichten einer Kolbenstange 4 umfasst einen Haltering 2 aufweisend einem kreisförmigen Innendurchmesser M1 und eine Mittenachse M, und umfasst vier Dichtsegmente 3, welche in zur Mittenachse M radialer Richtung R verschiebbar im Haltering 2 gelagert sind, wobei jedes Dichtsegment 3 eine zur Mittenachse M hin ausgerichtete und in Umfangsrichtung U zur Mittenachse M gekrümmt und zur Oberfläche der Kolbenstange 4 angepasst verlaufende Dichtfläche 3a aufweist. Jedes Dichtsegment 3 weist zwei gegenseitig parallel verlaufende, seitliche Dichtsegmentführungsflächen 3b auf, wobei die Dichtfläche 3a beidseitig an je einer der beiden Dichtsegmentführungsflächen 3b endet. Der Haltering 2 umfasst einen Grundring 2k und eine Mehrzahl von in Umfangsrichtung U gegenseitig beabstandet angeordnete Führungssegmente 2a, wobei die Führungssegmente 2a in Richtung der Mittenachse M über den Grundring 2k vorstehen, wobei jeweils zwei in Umfangsrichtung U nacheinander folgende Führungssegmente 2a gegenseitig zugewandte und parallel verlaufende Führungsflächen 2b, 2c aufweisen, die derart gegenseitig beabstandet angeordnet und ausgestaltet sind, dass jeweils ein einziges Dichtsegment 3 über dessen Dichtsegmentführungsflächen 3b an den zwei seitlichen Führungsflächen 2b,2c geführt und in radialer Richtung R verschiebbar gelagert ist, wobei in Umfangsrichtung U nacheinander folgend Führungssegmente 2a und Dichtsegmente 3 angeordnet sind.

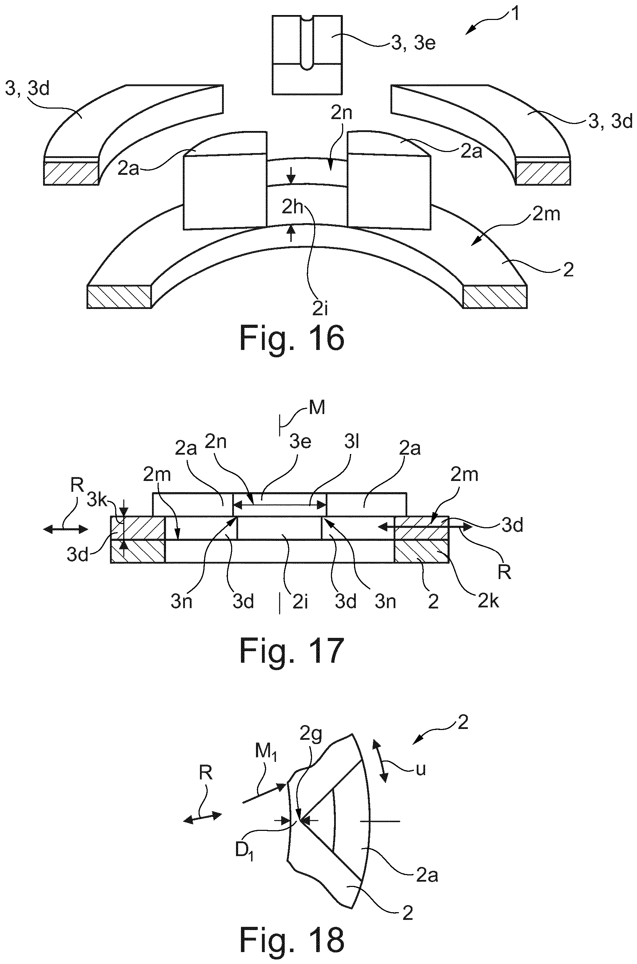

Die Führungssegmente 2a enden in Richtung zur Mittenachse M hin in einer Spitze 2g. In einer vorteilhaften Ausgestaltung verläuft die Spitze 2g, wie in Figur 2 dargestellt, in Richtung der Mittenachse M fluchtend zum Innendurchmesser M1. In einer weiteren möglichen Ausgestaltung weist die Spitze 2g des Führungssegmentes 2a, wie in Figur 18 dargestellt, in radialer Richtung R eine Distanz D 1 beziehungsweise einen Abstand von bis zu 0,4 mm, vorzugsweise von bis zu 0,2 mm zum Innendurchmesser M1 auf.

In einer vorteilhaften Ausgestaltung umfasst der Dichtring 1 wie in Figur 2 dargestellt vier Dichtsegmente 3 und vier Führungssegmente 2a, wobei die seitlichen Führungsflächen 2b,2c jedes Führungssegmentes 2a unter einem Winkel von 90 Grad verlaufen.

In einer vorteilhaften Ausgestaltung weist der Dichtring 1, wie in Figur 2 dargestellt, jeweils zwei bezüglich der Mittenachse M gegenüber liegend angeordnete Dichtsegmente 3 auf, welche in Umfangsrichtung U dieselbe Breite 31, aufweisen, wobei in Umfangsrichtung U nacheinander folgend angeordnete Dichtsegmente 3 in Umfangsrichtung U unterschiedliche Breiten 31 aufweisen. Der in Figur 2 dargestellte Dichtring 1 weist somit zwei schmale Dichtsegmente 3e und zwei breite Dichtsegmente 3d auf.

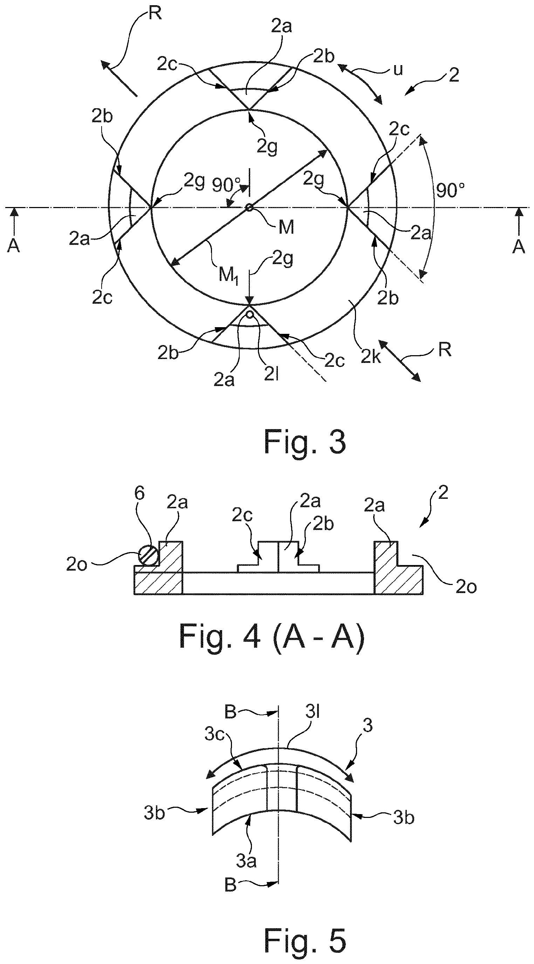

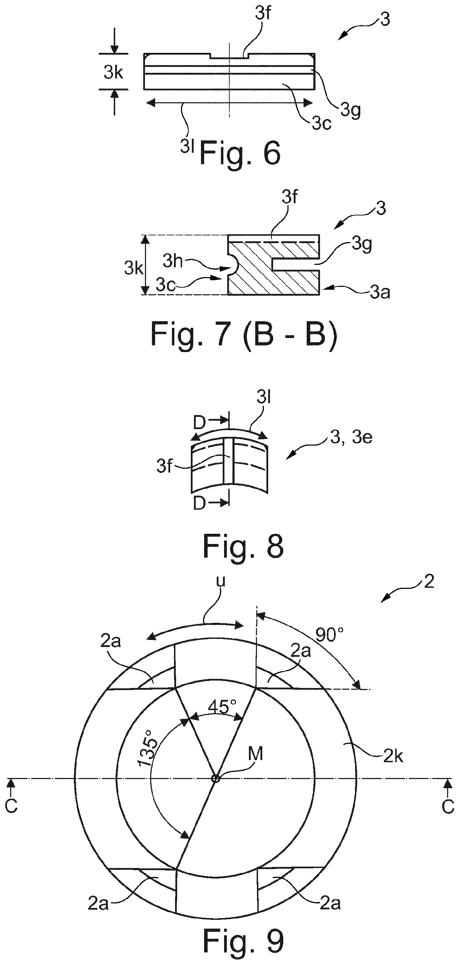

Ein weiteres Ausführungsbeispiel ist in Figur 3 in einer Draufsicht und in Figur 4 in einem Schnitt entlang der Linie A-A dargestellt. Entlang des Grundrings 2k sind vier in Richtung der Mittenachse M über den Grundring 2k vorstehende Führungssegmente 2a angeordnet, wobei in Umfangsrichtung U nacheinander folgende Führungssegmente 2a jeweils um 90 Grad versetzt angeordnet sind. Jedes Führungssegment 2a weist zwei seitliche Führungsflächen 2b, 2c auf, die unter einem Winkel von 90 Grad in die Spitze 2g münden. Die gegenüberliegenden Führungsflächen 2b,2c von zwei in Umfangsrichtung U nacheinander folgenden Führungssegmenten 2a bilden zwei parallel verlaufende Flächen, zwischen welchen jeweils ein Dichtsegment 3, wie in Figur 5 dargestellt, in radialer Richtung R verschiebbar gelagert ist. Das Dichtsegment 3 umfasst zwei parallel verlaufende Dichtsegmentführungsflächen 3b, eine Dichtfläche 3a sowie eine Dichtsegmentaussenseite 3c. Figur 6 zeigt eine Seitenansicht des Dichtsegmentes 3 und Figur 7 einen Schnitt entlang der Linie B-B des Dichtsegmentes 3. Das in den Figuren 5, 6, und 7 dargestellte Dichtsegment 3 umfasst einen radial verlaufenden Verbindungskanal 3f, eine Druckentlastungsnut 3g und eine Ausnehmung 3h für eine Feder. Das Dichtsegment 3 weist eine axiale Breite 3k auf. Alle vier für den Haltering 2 verwendeten Dichtsegmente 3 weisen in Umfangsrichtung U dieselbe Breite auf, sodass alle Dichtsegmente 3 identisch ausgestaltet sind.

In einer vorteilhaften Ausgestaltung weist das Führungssegment 2a, wie in Figur 4 dargestellt, eine Ausnehmung 2o auf, entlang welcher die in Figur 1 dargestellte Schlauchfeder 6 verlaufen kann, welche in einer möglichen Ausführungsform die Dichtsegmente 3 umschliesst.

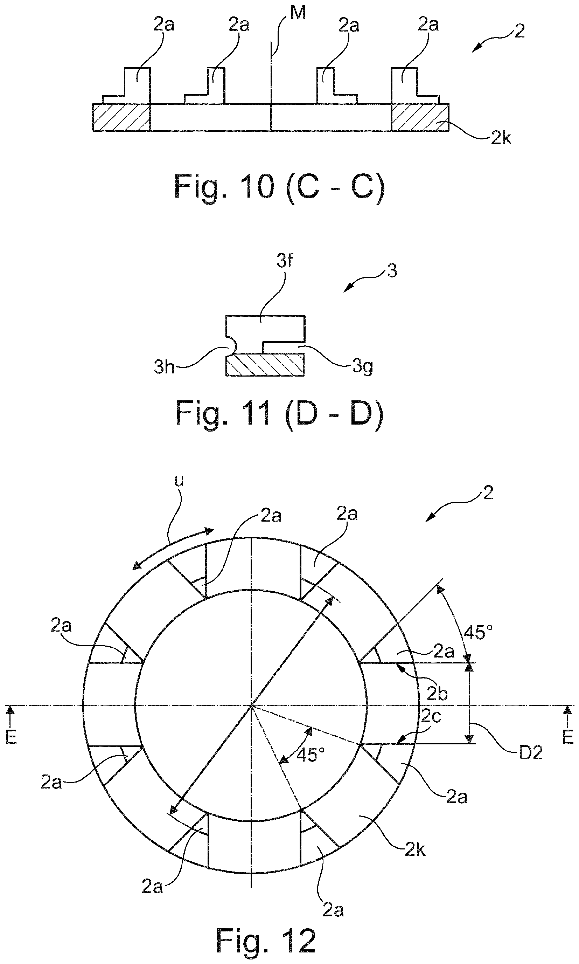

Ein weiteres Ausführungsbeispiel ist in Figur 9 in einer Draufsicht und in Figur 10 in einem Schnitt entlang der Linie C-C dargestellt. Entlang des Grundrings 2k sind vier in Richtung der Mittenachse M über den Grundring 2k vorstehende Führungssegmente 2a angeordnet, wobei in Umfangsrichtung U nacheinander folgende Führungssegmente 2a jeweils um 45 Grad oder um 135 Grad versetzt angeordnet sind. Jedes Führungssegment 2a weist zwei seitliche Führungsflächen 2b, 2c auf, die unter einem Winkel von 90 Grad in die Spitze 2g münden. Die gegenüberliegenden Führungsflächen 2b,2c von zwei in Umfangsrichtung U nacheinander folgenden Führungssegmenten 2a bilden zwei parallel verlaufende Flächen, zwischen welchen jeweils ein breites Dichtsegment 3d, oder wie in Figur 8 dargestellt, ein schmales Dichtsegment 3e, angeordnet ist.

Figur 7 zeigt einen Schnitt entlang der Linie D-D durch das Dichtsegmentes 3. Das Dichtsegment 3 umfasst einen radial verlaufenden Verbindungskanal 3f, eine Druckentlastungsnut 3g und eine Ausnehmung 3h für eine Feder.

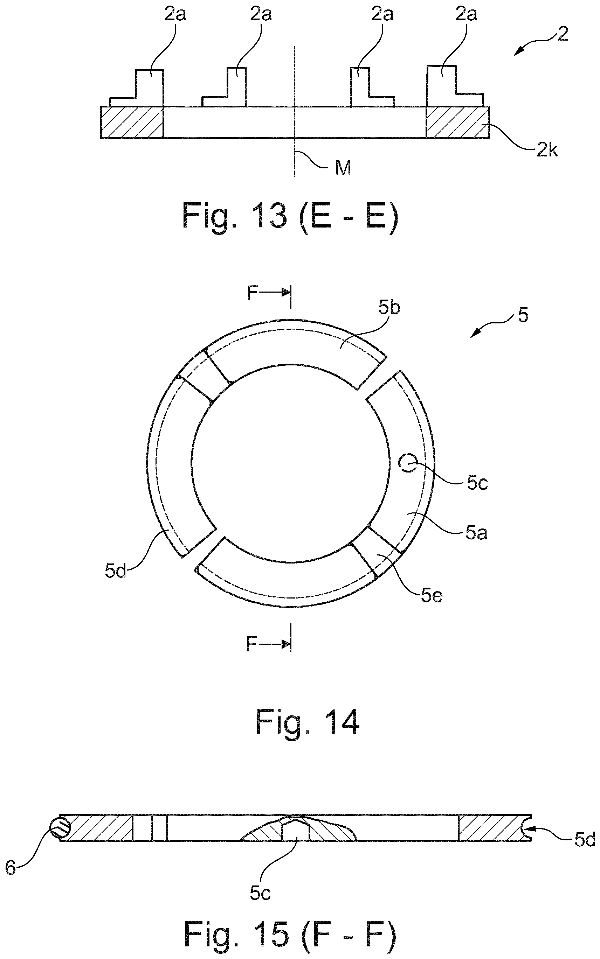

Ein weiteres Ausführungsbeispiel ist in Figur 12 in einer Draufsicht und in Figur 13 in einem Schnitt entlang der Linie E-E dargestellt. Entlang des Grundrings 2k sind acht in Richtung der Mittenachse M über den Grundring 2k vorstehende Führungssegmente 2a angeordnet, wobei in Umfangsrichtung U nacheinander folgende Führungssegmente 2a jeweils um 45 Grad versetzt angeordnet sind. Jedes Führungssegment 2a weist zwei seitliche Führungsflächen 2b, 2c auf, die unter einem Winkel von 45 Grad in die Spitze 2g münden. Die gegenüberliegenden Führungsflächen 2b,2c von zwei in Umfangsrichtung U nacheinander folgenden Führungssegmenten 2a bilden zwei parallel verlaufende Flächen, die um eine Distanz D2 gegenseitig beabstandet sind, und zwischen welchen jeweils ein Dichtsegment 3 angeordnet wird. Bei dem in Figur 12 dargestellten Haltering 2 sind alle Dichtsegment 3 vorzugsweise identisch ausgestaltet.

Der erfindungsgemässe Dichtring 1 umfasst zumindest vier in Umfangsrichtung U beabstandet angeordnete Dichtsegmente 3, und vorteilhafterweise vier, sechs oder acht Dichtsegmente 3, und entsprechend vier, sechs oder acht in Umfangsrichtung U zwischen den Dichtsegmenten 3 angeordnete Führungssegmente 2a. Vorteilhafterweise weisen alle Dichtsegmente 3 in Umfangsrichtung U dieselbe Breite 31 auf, und weisen alle Führungssegmente 2a in Umfangsrichtung U dieselbe Breite auf. Der Dichtring 1 könnte auch eine ungerade Anzahl von zumindest fünf Dichtsegmente 3 umfassen und dieselbe Anzahl Führungssegmente 2a umfassen, welche in Umfangsrichtung U zwischen den Dichtsegmenten 3 angeordnet sind. Der Winkel, unter welchem die beiden seitlichen Führungsflächen 2b,2c jedes Führungssegmentes 2a verlaufen, ist abhängig von der Gesamtanzahl Dichtsegmente 3 beziehungsweise der Gesamtanzahl der Führungssegmente 2a, welche der Gesamtanzahl Dichtsegmente 3 entspricht. Abhängig von der Gesamtanzahl ist der Winkel kleiner oder gleich 90 Grad. Bei vier Dichtsegmenten 3 bzw. Führungssegmenten 2a beträgt der Winkel 90 Grad. Bei fünf Dichtsegmenten 3 bzw. Führungssegmenten 2a beträgt der Winkel 72 Grad. Bei sechs Dichtsegmenten 3 bzw. Führungssegmenten 2a beträgt der Winkel 60 Grad oder bei acht Dichtsegmenten bzw. Führungssegmenten 45 Grad. Mit zunehmender Anzahl Dichtsegmenten 3 bzw. Führungssegmenten 2a wird der Winkel entsprechend kleiner.

Figur 14 zeigt in einer Draufsicht und Figur 15 in einem Schnitt entlang der Schnittlinie F-F ein Ausführungsbeispiel eines Deckrings 5. Der Deckring 5 umfasst eine erste und eine zweite Deckringhälfte 5a, 5b, und weist zudem eine Ausnehmung 5c zur Aufnahme eines Pins 21 auf, sowie eine Ausnehmung 5d zur Aufnahme einer Schlauchfeder 6 auf. Der Haltering 2 kann, wie in Figur 3 dargestellt, einen in Richtung der Mittenachse M vorstehenden Pin 21 aufweisen, wobei der Deckring 5 derart seitlich an den Dichtring 1 abgelegt wird, dass der vorstehende Pin 21 in der Ausnehmung 5c hineinragt, sodass der Deckring 5 bezüglich dem Dichtring 1 eine definierte Lage einnimmt.

In einer weiteren vorteilhaften Ausgestaltung sind zumindest zwei Dichtsegmente 3 derart im Dichtring 1 angeordnet, dass in Umfangsrichtung U nacheinander folgend angeordnete Dichtsegmente 3 in Richtung der Mittenachse M um eine Versatz 2h verschoben angeordnet sind. Figur 16 zeigt in einer perspektivischen Ansicht und Figur 17 in einem Schnitt zwei Ausführungsbeispiele einer derartigen Anordnung. In Figur 16 bildet der Grundring 2k eine Führungsfläche 2m, auf welcher die beiden breiten Dichtsegmente 3d in radialer Richtung R verschiebbar gelagert sind. Der Haltering 2 weist zwischen den beiden Führungssegmenten 2a ein Basisteil 2i mit Führungsfläche 2n auf, wobei die Höhe des Basisteils 2i dem Versatz 2h entspricht. Das schmale Dichtsegment 3e ist auf der Führungsfläche 2n in radialer Richtung R verschiebbar gelagert, sodass die schmalen und breiten Dichtsegmente 3e, 3d in Richtung der Mittenachse M um einen Versatz 2h verschoben angeordnet sind. Eine besonders vorteilhafte Anordnung mit Versatz 2h ist in Figur 17 dargestellt. Der Schnitt gemäss Figur 17 zeigt einen Grundring 2k mit Führungsfläche 2m und ein Basisteil 2i mit Führungsfläche 2n, sodass die Führungsflächen 2m, 2n in Richtung der Mittenachse M um einen Versatz 2h beabstandet angeordnet sind. Der Versatz 2h ist im dargestellten Ausführungsbeispiel so breit wie die axiale Breite 3k des breiten Dichtsegmentes 3d. Die Dichtsegmente 3d,3e sind in radialer Richtung R verschiebbar gelagert. Das schmale Dichtsegment 3e weist in Umfangsrichtung U eine Breite 31 auf, die grösser ist als die Breite der Führungsfläche 2n, was zur Folge hat, dass die beiden Dichtsegmente 3d, 3e links und rechts eine Überschneidungsstelle 3n haben, an welcher ein Teil der beiden Dichtsegmente 3d,3e in Richtung der Mittenachse M übereinander angeordnet sind. Eine derartige Überschneidungsstelle 3n weist den Vorteil einer verbesserten Abdichtung in axialer Richtung M auf. In einer vorteilhaften Ausgestaltung überdecken sich zumindest zwei in Umfangsrichtung U nacheinander folgend angeordnete Dichtsegmente 3 teilweise. Der Versatz 2h ist vorteilhafterweise zumindest so hoch wie eine axiale Breite 3k des Dichtsegmentes 3. Der Versatz 2h könnte jedoch auch grösser oder kleiner als die axiale Breite 3k sein.

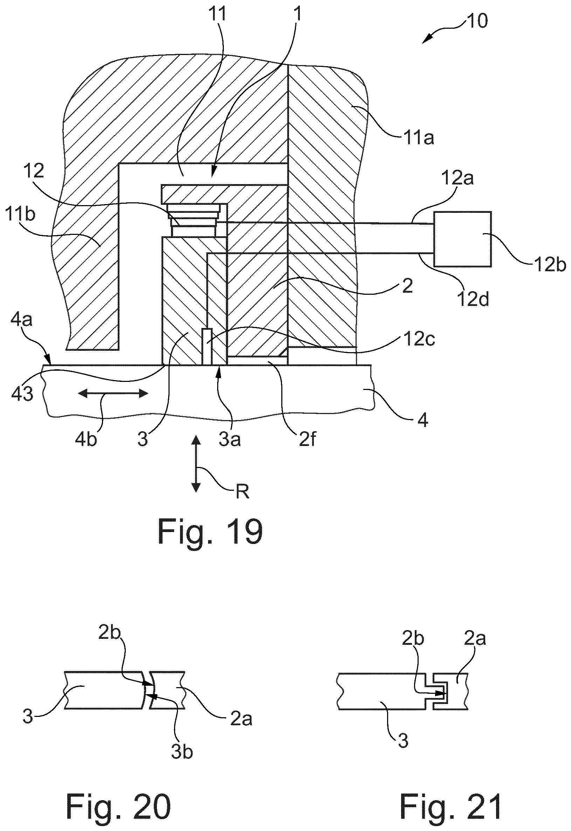

Figur 19 zeigt einen Längsschnitt durch eine Dichtungsanordnung 10 mit aktiv betätigbaren Dichtsegmenten 3. Im dargestellten Ausführungsbeispiel ist der Haltering 2 L-förmig ausgestaltet, wobei in radialer Richtung zwischen dem Dichtsegment 3 und dem Haltering 2 ein Antriebsmittel 12 angeordnet ist, beispielsweise ein Piezokristall, um die Lage des Dichtsegmenten 3 in radialer Richtung R anzusteuern, um dadurch die Breite des zwischen der Stirnseite 3a des Dichtsegments 3 und der Oberfläche 4a der Kolbenstange 4 gebildeten Dichtspalts 43 einzustellen. Das Antriebsmittel 12 ist über elektrische Leitungen 12a mit einer Ansteuervorrichtung 12b verbunden. In einer vorteilhaften Ausgestaltung ist zudem ein Sensor 12c vorgesehen, der beispielsweise im Dichtsegment 3 angeordnet ist, wobei der Sensor 12c ebenfalls Signal leitend, zum Beispiel über eine Leitung 12d, mit der Ansteuervorrichtung 12b verbunden ist, sodass sich ein Regelkreis ausbildet, welcher in der Lage ist den Abstand der Dichtfläche 3a zur Oberfläche 4a der Kolbenstange 4 zu regeln. Vorteilhafterweise wird dieser Abstand derart geregelt, dass die Dichtfläche 3a die Oberfläche 4a kaum oder gerade nicht berührt. In einer vorteilhaften Ausgestaltung ist für jedes Dichtsegment 3 des Dichtrings 1 eine Antriebsmittel 12 vorgesehen, sodass jedes Dichtsegment 3 vorzugsweise auch individuell in radialer Richtung R verschiebbar angesteuert werden kann. In einer vorteilhaften Ausgestaltung ist zudem für jedes Dichtsegment 3 ein Sensor 12c vorgesehen, um die Spaltbreite 43 jedes Dichtsegments 3 individuell anzusteuern.

Das erfindungsgemässe Dichtsegment 3 wird vorteilhafterweise in einer Dichtungsanordnung 10 zum Abdichten einer in axialer Richtung 4b verlaufenden Kolbenstange 4 eines Kolbenkompressors verwendet. Eine derartige Dichtungsanordnung 10 umfasst zumindest eine Packungskammer 11, wobei die Packungskammer 11 in axialer Richtung 4b von einer ersten und einer zweiten Seitenwand 11a, 11b begrenzt ist, wobei in der Packungskammer 11 zumindest ein Dichtring 1 angeordnet ist. Üblicherweise umfasst eine Dichtungsanordnung eine Mehrzahl von in axialer Richtung beabstandeten Packungskammern 11, in welchen je ein Dichtring 1 angeordnet ist. Es kann sich als vorteilhaft erweisen für jeden Dichtring 1 noch einen Deckring 5 vorzusehen, der in axialer Richtung unmittelbar neben dem Dichtring 1 angeordnet ist.

Die in Figur 18 dargestellte Anordnung der Spitze 2g, unter einer geringen Distanz D1 von vorzugsweise ein bis mehreren Zehntel Millimeter zum Innendurchmesser M1, hat zur Folge, dass sich die zwei in Umfangsrichtung U nacheinander folgend angeordneten Dichtsegmente 3 im Bereich zwischen dem Innendurchmesser M1 und der Spitze 2g gegenseitig berühren können, sodass sich die Dichtsegmente 3 im Bereich der gegenseitigen Berührungsstelle gegebenenfalls leicht verformen. Dies hat zur Folge, dass die Dichtsegmente im Bereich der Spitze 2g in axialer Richtung eine besonders gute Dichtwirkung erzeugen. In einer weiteren vorteilhaften Ausführungsform ist die Spitze 2g fluchtend zum Innendurchmesser M1 angeordnet, das heiss die Distanz D1 ist null. Auch diese Ausgestaltung weist Vorteile auf, indem die Dichtsegmente 3 in radialer Richtung R nach der Spitze 2g, das heisst im Bereich der Spalte 2f, sich gegenseitig berühren könnten. Diese gegenseitige Berührung hat zur Folge, dass der Spalte 2f an dieser Stelle in axialer Richtung 4b besonders gut abgedichtet wird. Aus Figur 2 ist ersichtlich, dass das Dichtsegment 3 an dieser Stelle relativ schmale Endkanten 3n aufweisen kann, welche mit relativ geringer Kraft elastisch oder plastisch verformbar sind, was zur Folge hat, dass der sich unmittelbar vor der Spitze 2g befindliche Bereich der Spalte 2f durch das sich in diesem Bereich vorzugsweise elastisch oder plastisch verformende Dichtsegment 3 abgedichtet wird. Dies hat zur Folge, dass der Spalte 2f im Bereich unmittelbar vor der Spitze 2g abgedichtet ist, obwohl die Spitze 2g selbst kein Dichtsegment 3 aufweist, und die Spitze 2g immer einen geringfügigen Abstand zur Oberfläche 4a der Kolbenstange 4 aufweist.

In den dargestellten Ausführungsbeispielen sind die Dichtsegmentführungsflächen 3b und die seitlichen Führungsflächen 2b, 2c immer als ebene Flächen dargestellt. Diese Flächen können jedoch in einer Vielzahl von möglichen Formen ausgestaltet sein, wobei diese Formen derart ausgestaltet sein müssen, dass das Dichtsegment 3 in radialer Richtung R verschiebbar im Haltering 2 gelagert ist. Die Figuren 20 und 21 zeigen beispielhaft zwei mögliche Ausgestaltungen, der gegenseitigen Führungsflächen von Führungssegment 2a und Dichtsegment 3. Diese Ausgestaltungen weisen den Vorteil auf, dass das Dichtsegment 3 derart geführt ist, dass nur eine Bewegung in radialer Richtung R möglich ist, wogegen eine Bewegung in Richtung der Mittenachse M ausgeschlossen ist.

## Patentansprüche

1. Dichtring (1) zum Abdichten einer Kolbenstange (4), umfassend einen einstückigen, sich über 360° erstreckenden Haltering (2) aufweisend einem kreisförmigen Innendurchmesser (M1) und eine Mittenachse (M), sowie umfassend eine Mehrzahl von Dichtsegmenten (3), welche in zur Mittenachse (M) radialer Richtung verschiebbar im Haltering (2) gelagert sind, wobei jedes Dichtsegment (3) eine zur Mittenachse (M) hin ausgerichtete und in Umfangsrichtung (U) zur Mittenachse (M) gekrümmt verlaufende Dichtfläche (3a) aufweist, und wobei jedes Dichtsegment (3) zwei gegenseitig parallel verlaufende seitliche Dichtsegmentführungsflächen (3b) aufweist, wobei die Dichtfläche (3a) beidseitig an je einer der beiden Dichtsegmentführungsflächen (3b) endet, und wobei der Haltering (2) eine Mehrzahl von in Umfangsrichtung (U) gegenseitig beabstandet angeordnete Führungssegmente (2a) umfasst, wobei jeweils zwei in Umfangsrichtung (U) nacheinander folgende Führungssegmente (2a) gegenseitig zugewandte und parallel verlaufende Führungsflächen (2b, 2c) aufweisen, die derart gegenseitig beabstandet angeordnet und ausgestaltet sind, dass das Dichtsegment (3) über dessen Dichtsegmentführungsflächen (3b) an den zwei seitlichen Führungsflächen (2b,2c) geführt und in radialer Richtung (R) verschiebbar gelagert ist, wobei in Umfangsrichtung (U) nacheinander folgend Führungssegmente (2a) und Dichtsegmente (3) angeordnet sind.

2. Dichtring nach Anspruch 1, **dadurch gekennzeichnet, dass** die Führungssegmente (2a) in Richtung zur Mittenachse (M) hin in einer Spitze (2g) enden.

3. Dichtring nach Anspruch 2, **dadurch gekennzeichnet, dass** die Spitze (2g) in Richtung der Mittenachse (M) fluchtend zum Innendurchmesser (M1) verläuft.

4. Dichtring nach Anspruch 2, **dadurch gekennzeichnet, dass** die Spitze (2g) in radialer Richtung (R) um eine Distanz von bis zu 0,4 mm, vorzugsweise von bis zu 0,2 mm vom Innendurchmesser (M1) beabstandet ist.

5. Dichtring nach einem der vorhergehenden Ansprüche, **dadurch gekennzeichnet, dass** die seitlichen Führungsflächen (2b,2c) jedes Führungssegmentes (2a) unter einem Winkel von maximal 90 Grad verlaufen.

6. Dichtring nach einem der vorhergehenden Ansprüche, **dadurch gekennzeichnet, dass** dieser eine gerade Anzahl zumindest jedoch vier Dichtsegmente (3) umfasst, und dass dieser dieselbe Anzahl Führungssegmente (2a) umfasst, welche in Umfangsrichtung (U) zwischen den Dichtsegmenten (3) angeordnet sind.

7. Dichtring nach einem der Ansprüche 1 bis 5, **dadurch gekennzeichnet, dass** dieser eine ungerade Anzahl zumindest jedoch fünf Dichtsegmente (3) umfasst, und dass dieser dieselbe Anzahl Führungssegmente (2a) umfasst, welche in Umfangsrichtung (U) zwischen den Dichtsegmenten (3) angeordnet sind.

8. Dichtring nach Anspruch 6 oder 7 , **dadurch gekennzeichnet, dass** alle Dichtsegmente (3) in Umfangsrichtung (U) dieselbe Breite aufweisen, und dass alle Führungssegmente (2a) in Umfangsrichtung (U) dieselbe Breite aufweisen.

9. Dichtring nach Anspruch 6 , **dadurch gekennzeichnet, dass** jeweils zwei bezüglich der Mittenachse (M) gegenüber liegend angeordnete Dichtsegmente (3) in Umfangsrichtung (U) dieselbe Breite aufweisen, und dass in Umfangsrichtung (U) nacheinander folgend angeordnete Dichtsegmente (3) in Umfangsrichtung (U) unterschiedliche Breiten aufweisen.

10. Dichtring nach einem der vorhergehenden Ansprüche, **dadurch gekennzeichnet, dass** in Umfangsrichtung (U) nacheinander folgend angeordnete Dichtsegmente (3) in Richtung der Mittenachse (M) um eine Versatz (2h) verschoben angeordnet sind.

11. Dichtring nach Anspruch 10, **dadurch gekennzeichnet dass** der Versatz (2h) zumindest so hoch ist wie eine axiale Breite (3k) des Dichtsegmentes (3).

12. Dichtring nach Anspruch 10, **dadurch gekennzeichnet, dass** zumindest eines der Dichtsegments (3) ein in Umfangsrichtung (U) benachbart angeordnetes Dichtsegment (3) teilweise überdeckt.

13. Dichtring nach einem der vorhergehenden Ansprüche, **dadurch gekennzeichnet, dass** dieser zumindest eine Antriebsvorrichtung (12) umfasst, welche derart ausgestaltet und angeordnet ist, dass diese die Lage zumindest eines Dichtsegments (3) in radialer Richtung (R) bestimmt.

14. Dichtring nach Anspruch 13, **dadurch gekennzeichnet, dass** jedem Dichtsegment (3) eine Antriebsvorrichtung (12) zugeordnet ist, um die Lage jedes Dichtsegments (3) individuell zu beeinflussen.

15. Dichtungsanordnung (10) zum Abdichten einer in axialer Richtung (4b) verlaufenden Kolbenstange (4) eines Kolbenkompressors, umfassend zumindest eine Packungskammer (11), wobei die Packungskammer (11) in axialer Richtung (4b) von einer ersten und einer zweiten Seitenwand (11a, 11b) begrenzt ist, wobei in der Packungskammer (11) zumindest ein Dichtring (1) gemäss Anspruch 1 angeordnet ist.

## Claims

1. A sealing ring (1) for sealing off a piston rod (4), comprising an integral holding ring (2) extending over 360°, having a circular inner diameter (M1) and a central axis (M), and comprising a multiplicity of sealing segments (3) which are mounted in holding ring (2) so as to be displaceable in a radial direction relative to the central axis (M), wherein each sealing segment (3) has a sealing surface (3a) which is aligned towards central axis (M) and runs in a curved manner in the circumferential direction (U) to the central axis (M), and wherein each sealing segment (3) has two lateral sealing segment guide surfaces (3b) running mutually parallel, wherein the sealing surface (3a) ends on both sides at in each case one of the two sealing segment guide surfaces (3b), and wherein the holding ring (2) comprises a multiplicity of guide segments (2a) arranged mutually spaced apart in the circumferential direction (U), wherein in each case two guide segments (2a) following consecutively in the circumferential direction (U) have guide surfaces 25 (2b, 2c) which face one another and run parallel and which are arranged mutually spaced apart and configured in such a manner that the sealing segment (3) is guided via its sealing segment guide surfaces (3b) on the two lateral guide 30 surfaces (2b, 2c) and is mounted displaceably in the radial direction (R), wherein guide segments (2a) and sealing segments (3) are arranged following consecutively in the circumferential direction (U).

2. The sealing ring as claimed in claim 1, **characterized in that** the guide segments (2a) end in a tip (2g) in the direction of the central axis (M).

3. The sealing ring as claimed in claim 2, **characterized in that** the tip (2g) runs flush with the inner diameter (M1) in the direction of the central axis (M).

4. The sealing ring as claimed in claim 2, **characterized in that** the tip (2g) is spaced apart from the inner diameter (M1) in the radial direction (R) by a distance of up to 0.4 mm, preferably of up to 0.2 mm.

5. The sealing ring as claimed in any one of the preceding claims, **characterized in that** the lateral guide surfaces (2b, 2c) of each guide segment (2a) run at an angle of a maximum of 90 degrees.

6. The sealing ring as claimed in any one of the preceding claims, **characterized in that** said sealing ring comprises an even number at least, however, of four sealing segments (3) and **in that** said sealing ring comprises the same number of guide segments (2a) which are arranged in the circumferential direction (U) between the sealing segments (3).

7. The sealing ring as claimed in any one of claims 1 to 5, **characterized in that** said sealing ring comprises an odd number at least, however, of five sealing segments (3) and **in that** said sealing ring comprises the same number of guide segments (2a) which are arranged in the circumferential direction (U) between the sealing segments (3).

8. The sealing ring as claimed in claim 6 or 7, **characterized in that** all the sealing segments (3) have the same width in the circumferential direction (U) and **in that** all the guide segments (2a) have the same width in the circumferential direction (U).

9. The sealing ring as claimed in claim 6, **characterized in that** in each case two sealing segments (3) arranged opposite one another in relation to the central axis (M) have the same width in the circumferential direction (U) and **in that** sealing segments (3) arranged following consecutively in the circumferential direction (U) have different widths in the circumferential direction (U).

10. The sealing ring as claimed in any one of the preceding claims, **characterized in that** sealing segments (3) arranged following consecutively in the circumferential direction (U) are arranged displaced by an offset (2h) in the direction of the central axis (M).

11. The sealing ring as claimed in claim 10, **characterized in that** the offset (2h) is at least as high as an axial width (3k) of the sealing segment (3).

12. The sealing ring as claimed in claim 10, **characterized in that** at least one of the sealing segments (3) partially covers a sealing segment (3) arranged adjacently in the circumferential direction (U).

13. The sealing ring as claimed in any one of the preceding claims, **characterized in that** said sealing ring comprises at least one drive device (12) which is configured and arranged such that it determines the position of at least one sealing segment (3) in the radial direction (R).

14. The sealing ring as claimed in claim 13, **characterized in that** each sealing segment (3) is assigned a drive device (12) in order to influence the position of each sealing segment (3) individually.

15. A seal arrangement (10) for sealing off a piston rod (4), running in the axial direction (4b), of a piston compressor, comprising at least one packing chamber (11), wherein the packing chamber (11) is delimited in the axial direction (4b) by a first and a second side wall (11a, 11b), wherein at least one sealing ring (1) according to claim 1 is arranged in the packing chamber (11).

## Revendications

1. Bague d'étanchéité (1) destinée à l'étanchéification d'une tige de piston (4), comprenant une bague de retenue (2) fabriquée d'une seule pièce, qui s'étend sur 360° et qui présente un diamètre intérieur (M1) de forme circulaire et un axe central (M), et comprenant également une pluralité de segments d'étanchéité (3), lesquels sont positionnés dans la bague de retenue (2) de manière à pouvoir coulisser dans la direction radiale par rapport à l'axe central (M) ;
dans laquelle chaque segment d'étanchéité (3) présente une surface d'étanchéité (3a) qui est orientée en direction de l'axe central (M) et qui s'étend de manière incurvée dans la direction circonférentielle (U) par rapport à l'axe central (M) ; et
dans laquelle chaque segment d'étanchéité (3) présente deux surfaces de guidage (3b) de segment d'étanchéité latérales, qui s'étendent parallèlement l'une par rapport à l'autre ;
dans laquelle la surface d'étanchéité (3a) prend fin des deux côtés, au niveau de chacune des deux surfaces de guidage (3b) de segment d'étanchéité ; et
dans laquelle la bague de retenue (2) comprend une pluralité de segments de guidage (2a) qui sont disposés à distance les uns des autres, dans la direction circonférentielle (U) ;
dans laquelle respectivement deux segments de guidage (2a) qui se suivent de manière consécutive dans la direction circonférentielle (U) présentent des surfaces de guidage (2b, 2c) qui se font mutuellement face et qui s'étendent parallèlement l'une par rapport à l'autre, lesquelles sont disposées à distance les unes des autres et lesquelles sont configurées de telle sorte que le segment d'étanchéité (3) est guidé au niveau des deux surfaces de guidage (2b, 2c) latérales par l'intermédiaire de ses surfaces de guidage (3b) de segment d'étanchéité et est positionné dans la direction radiale (R) de manière à pouvoir coulisser ; dans laquelle des segments de guidage (2a) et des segments d'étanchéité (3) sont disposés les uns à la suite des autres dans la direction circonférentielle (U).

2. Bague d'étanchéité selon la revendication 1, **caractérisée en ce que** les segments de guidage (2a) prennent fin dans une pointe (2g), en direction de l'axe central (M).

3. Bague d'étanchéité selon la revendication 2, **caractérisée en ce que** la pointe (2g) s'étend dans la direction de l'axe central (M), en alignement par rapport au diamètre intérieur (M1).

4. Bague d'étanchéité selon la revendication 2, **caractérisée en ce que** la pointe (2g) se trouve, dans la direction radiale (R), à une distance allant jusqu'à 0,4 mm, de préférence allant jusqu'à 0,2 mm, par rapport au diamètre intérieur (M1).

5. Bague d'étanchéité selon l'une des revendications précédentes, **caractérisée en ce que** les surfaces de guidage (2b, 2c) latérales de chaque segment de guidage (2a) s'étendent sous un angle maximal de 90 degrés.

6. Bague d'étanchéité selon l'une des revendications précédentes, **caractérisée en ce que** ladite bague d'étanchéité comprend un nombre pair de segments d'étanchéité (3), cependant tout au moins quatre, et **caractérisée en ce que** ladite bague d'étanchéité comprend le même nombre de segments de guidage (2a), lesquels sont disposés entre les segments d'étanchéité (3), dans la direction circonférentielle (U).

7. Bague d'étanchéité selon l'une des revendications 1 à 5, **caractérisée en ce que** ladite bague d'étanchéité comprend un nombre impair de segments d'étanchéité (3), cependant tout au moins cinq, et **caractérisée en ce que** ladite bague d'étanchéité comprend le même nombre de segments de guidage (2a), lesquels sont disposés entre les segments d'étanchéité (3), dans la direction circonférentielle (U).

8. Bague d'étanchéité selon la revendication 6 ou 7, **caractérisée en ce que** tous les segments d'étanchéité (3) présentent la même largeur dans la direction circonférentielle (U) et **caractérisée en ce que** tous les segments de guidage (2a) présentent la même largeur dans la direction circonférentielle (U).

9. Bague d'étanchéité selon la revendication 6, **caractérisée en ce que** respectivement deux segments d'étanchéité (3) qui sont disposés l'un en face de l'autre, par rapport à l'axe central (M), présentent la même largeur dans la direction circonférentielle (U), et **caractérisée en ce que** des segments d'étanchéité (3), lesquels sont disposés les uns à la suite des autres dans la direction circonférentielle (U), présentent des largeurs différentes dans la direction circonférentielle (U).

10. Bague d'étanchéité selon l'une des revendications précédentes, **caractérisée en ce que** des segments d'étanchéité (3), lesquels sont disposés les uns à la suite des autres dans la direction circonférentielle (U), sont disposés dans la direction de l'axe central (M) en étant décalés selon un décalage (2h).

11. Bague d'étanchéité selon la revendication 10, **caractérisée en ce que** le décalage (2h) est tout au moins aussi élevé qu'une largeur axiale (3k) du segment d'étanchéité (3).

12. Bague d'étanchéité selon la revendication 10, **caractérisée en ce que** tout au moins l'un des segments d'étanchéité (3) recouvre en partie un segment d'étanchéité (3) disposé de manière adjacente dans la direction circonférentielle (U).

13. Bague d'étanchéité selon l'une des revendications précédentes, **caractérisée en ce que** ladite bague d'étanchéité comprend tout au moins un dispositif d'entraînement (12), lequel est configuré et disposé de telle sorte que ledit dispositif d'entraînement détermine la position de tout au moins un segment d'étanchéité (3) dans la direction radiale (R).

14. Bague d'étanchéité selon la revendication 13, **caractérisée en ce qu'**un dispositif d'entraînement (12) est associé à chaque segment d'étanchéité (3), en vue d'influer individuellement sur la position de chaque segment d'étanchéité (3).

15. Dispositif formant garniture étanche (10) destiné à l'étanchéification d'une tige de piston (4) d'un compresseur à piston, laquelle s'étend dans la direction axiale (4b), comprenant tout au moins une chambre de garniture étanche (11) ;
dans laquelle la chambre de garniture étanche (11) est délimitée par une première et par une deuxième parois latérales (11a, 11b) dans la direction axiale (4b) ; dans laquelle tout au moins une bague d'étanchéité (1) selon la revendication 1 est disposée dans la chambre de garniture étanche (11).
